# EUROPÄISCHE PATENTSCHRIFT

(11) **EP 0 612 604 B1**
(45) Veröffentlichungstag und Bekanntmachung des Hinweises auf die Patenterteilung: **28.04.1999**
(21) Anmeldenummer: 93890024.8
(22) Anmeldetag: 24.02.1993
(51) Int. Cl.: B29C 47/90

(54) **Vorrichtung und Verfahren zur Herstellung eines Profilkörpers**
Device and process for manufacturing profiles
Dispositif et procédé pour la fabrication d'un profilé

(43) Veröffentlichungstag der Anmeldung: 31.08.1994
(73) Patentinhaber: Krüger, Ernst Dr., 49124 Georgsmarienhütte (DE)
(72) Erfinder: Topf, Siegfried, A-4050 Traun (AT); Freund, Fritz, D-6445 Alheim-Baumbach (DE); Poljanac, Rudolf, D-6440 Bebra (DE); Krüger, Ernst, Dr., D-4504 Georgsmarienhütte (DE)
(74) Vertreter: Müllner, Erwin, Dr.

(56) Entgegenhaltungen:
- EP-A- 0 021 417
- EP-A- 0 305 874
- DE-A- 1 504 092
- DE-A- 2 244 294
- DE-A- 2 456 986
- DE-U- 8 810 927
- FR-A- 2 264 647
- US-A- 2 423 260
- US-A- 4 508 500

## Beschreibung

Die Erfindung bezieht sich auf eine Vorrichtung zur Herstellung eines Profilkörpers, bestehend aus einer Plastifiziervorrichtung zur kontinuierlichen Erzeugung dieses Profilkörpers, aus einer diesen Profilkörper kontinuierlich abziehenden Abzugsvorrichtung und aus einer zwischen der Plastifiziervorrichtung und der Abzugsvorrichtung angeordneten Kalibrierung, durch welche der Profilkörper hindurchgezogen wird, wobei zwischen der Plastifiziervorrichtung und der eigentlichen Kalibrierung zumindest im Bereich der Flächen des Profilkörpers, die später sichtbar sind, jeweils ein metallischer Streifen angebracht ist, der quer zur Bewegungsrichtung des Profilkörper verlaufend mindestens so breit wie dieser ist und der mit der Stirnseite bis in die Ebene hineinragt, in der die entsprechende Fläche des Profilkörpers liegt.

Eine Vorrichtung der eingangs genannten Art ist aus der FR-A-2 264 647 bekannt. Sie wird beispielsweise zur Herstellung von Fensterprofilen eingesetzt, bei denen es sich um Hohlprofile handelt. Das aus der Plastifiziervorrichtung - im folgenden kurz "Extruder" genannt - austretende, noch weiche Material muß insbesondere bei Hohlprofilen solange kalibriert werden, bis es durch Abkühlung ausreichend formstabil ist. Dazu ist in der Vorrichtung beispielsweise ein Kalibriertisch mit einer Kalibrierung vorgesehen, in der ein hohl ausgeführter Profilkörper durch Unterdruck so gehalten werden kann, daß er nicht in sich zusammenfallen kann. In der Kalibrierung wird der Profilkörper kalibriert und unter Einsatz von Wasser gekühlt.

Die Kalibrierung besteht im Normalfall aus mehreren, in Bewegungsrichtung des Profilkörpers hintereinander angeordneten Abschnitten. Sie hat zur einwandfreien Zuführung des vom Extruder kommenden Profilkörpers vor der Einführungsöffnung metallische Streifen, die den Querschnitt der Einführungsöffnung verringern. Die Kalibrierung ist in ihrem Verlauf außerdem mit einer Vielzahl von Bohrungen und/oder Schlitzen versehen, über welche der Profilkörper mittels Vakuum an ihre innere Oberfläche gesogen wird. Der Kontakt des Profilkörpers mit der Kalibrierung in der Einführungsöffnung führt dazu, daß das Material des Profilkörpers an seiner Oberfläche durch Abkühlung schon relativ fest geworden ist, bevor es in den Bereich der Kalibrierung mit den genau eingestellten Abmessungen gelangt. Es kann daher geschehen, daß von der Düse des Extruders herrührende Markierungen in der Oberfläche des Profilkörpers nicht mehr geglättet werden können. Wenn solche Markierungen an sichtbaren Flächen des Profilkörpers vorhanden sind, ist derselbe Ausschuß. Ein weiteres Problem bei der Herstellung eines solchen Profilkörpers ist durch die im Material desselben enthaltenen Gleitmittel gegeben. Sie wandern grundsätzlich an die Oberfläche des heißen, aus dem Extruder austretenden Profilkörpers. Die beispielsweise aus Wachsen und Fetten bestehenden Gleitmittel lagern sich beim Durchlaufen der Kalibrierung ungleichmäßig ab. Sie werden dadurch ungleichmäßig in die Oberfläche des Profilkörpers eingedrückt, sodaß sich streifige Strukturen ergeben. Auch ein solcher Profilkörper wäre Ausschuß.

Der Erfindung liegt die Aufgabe zugrunde, die eingangs geschilderte Vorrichtung bzw. das eingangs geschilderte Verfahren so weiterzubilden, daß einwandfreie Oberflächen des Profilkörpers gewährleistet werden.

Diese Aufgabe wird gemäß der Erfindung bei einer Vorrichtung der eingangs genannten Art dadurch gelöst, daß die Breite dieses Steifens in Bewegungsrichtung des Profilkörper maximal 25 mm, vorzugsweise maximal 10 mm beträgt und daß der Streifen durch einen mit Vakuum beaufschlagten Luftspalt von der Kalibrierung getrennt ist.

Durch die Anordnung des metallischen Streifens zwischen dem Extruder und der direkt an dessen Austrittsöffnung anschließenden Kalibrierung ist sichergestellt, daß der Streifen mit seiner Stirnfläche an dem Profilkörper anliegt, wenn dessen Material noch relativ weich und daher gut verformbar ist. Unebenheiten und Markierungen an der entsprechenden Oberfläche des Profilkörpers werden durch den Streifen also weggebügelt. Diese Funktion des Streifens wird durch seine in Bewegungsrichtung des Profilkörpers geringe Breite und den direkt anschließenden Luftspalt sichergestellt, der während des Betriebes der Vorrichtung mit Vakuum beaufschlagt wird. Durch dieses Vakuum wird der noch warme und daher relativ weiche Formkörper ständig an die Stirnseite des Streifens gezogen.

Demgemäß ist bei einem Verfahren der eingangs genannten Art erfindungsgemäß vorgesehen, daß in dem Einlaufbereich der Kalibriervorrichtung durch einen Spalt quer zur Extrusionsrichtung ein gleichmäßiges Vakuum an zumindest die Flächen des Profilkörpers, die später sichtbar sind, angelegt wird, daß auch bei Zufuhr von Falschluft dieses Vakuum aufrecht erhalten bleibt, weil das Volumen des Spaltes im Verhältnis zu dem darüberliegenden Vakuumraum klein ist, und daß aus der Oberfläche des Profiles durch das im heißen Zustand anliegende Vakuum flüchtige Bestandteile abgezogen werden und diese Bestandteile über das Vakuum abtransportiert werden. Der Luftspalt stellt also einen engen Spalt dar im Vergleich zur darüberliegenden Vakuumkammer, durch welche ein Vakuum mit vergrößertem Volumen anwendbar ist. Während des Betriebes in den Luftspalt eindringende Luftblasen machen sich daher bezüglich der Ansaugwirkung des Vakuums nicht bemerkbar. Außerdem wird durch das große Vakuum im Bereich der noch heißen Oberfläche des Profilkörpers ein wesentlicher Teil der äußeren Gleitmittel in flüchtiger Form abgesogen. Die Oberfläche des Profilkörpers bleibt daher streifenfrei.

Vorteilhafte Ausgestaltungen der Erfindung gehen aus den Unteransprüchen sowie aus der folgenden Figurenbeschreibung hervor.

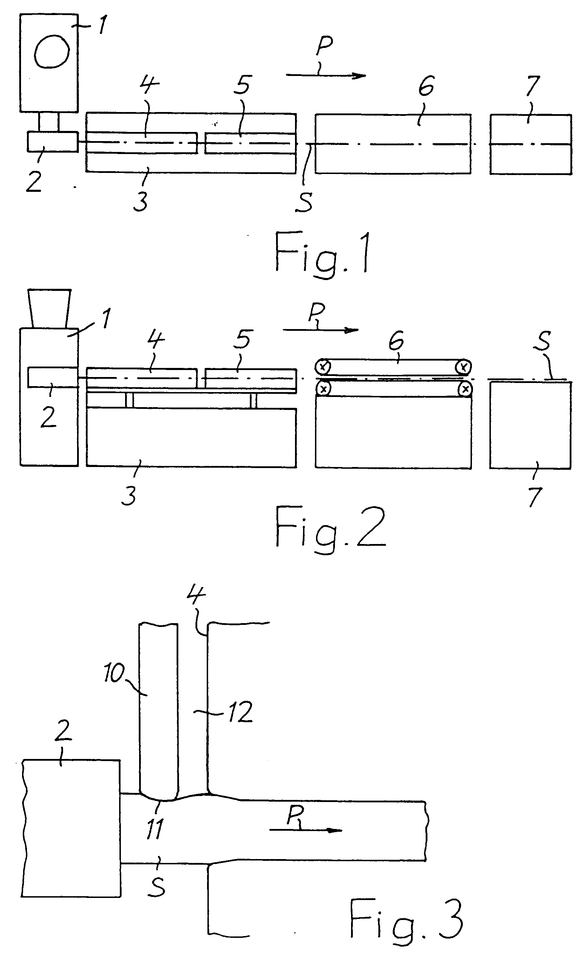

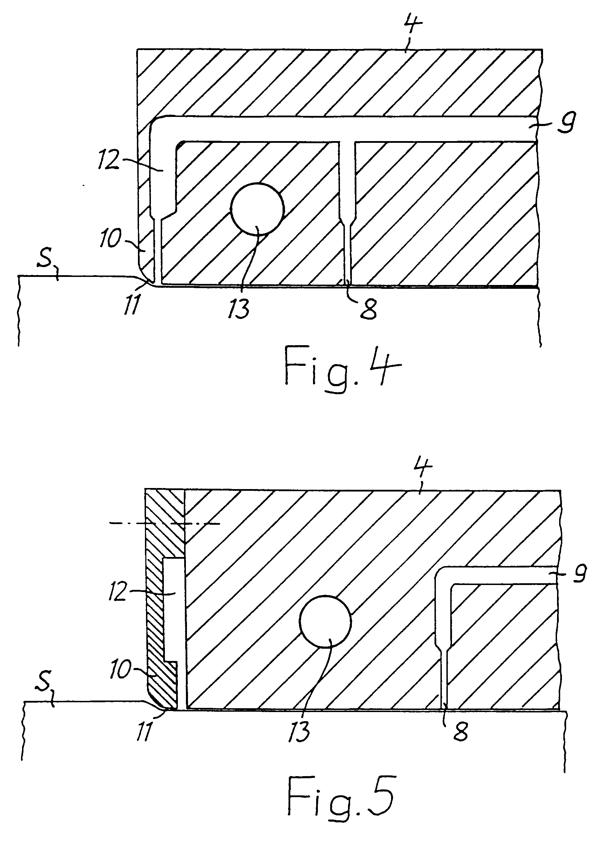

Ausführungsbeispiele des Erfindungsgegenstandes sind in den Zeichnungen dargestellt. Es zeigt: Fig. 1 eine Draufsicht auf eine Vorrichtung nach der Erfindung in schematischer Darstellung; Fig. 2 eine Seitenansicht der Vorrichtung nach Fig. 1; Fig. 3 eine Einzelheit der Vorrichtung in prinzieller, vergrößerter Darstellung; und Fig. 4 und 5 Einzelheiten der Vorrichtung in zwei unterschiedlichen Ausführungsformen in gegenüber Fig. 1 und 2 vergrößerter Darstellung.

Von einem Extruder 1 wird ein beispielsweise aus thermoplastischem Kunststoff bestehender Profilkörper - im folgenden kurz "Strang S" genannt - erzeugt, bei dem es sich beispielsweise um einen für Fensterrahmen verwendbaren hohlen Profilkörper handeln kann. Der Strang S kann jede beliebige Querschnittsform haben. Er kann auch massiv ausgeführt sein.

Der aus dem Spritzkopf 2 des Extruders 1 austretende, in den Fig. 1 und 2 durch eine strichpunktierte Linie angedeutete Strang S wird unmittelbar einer auf einem Kalibriertisch 3 angebrachten Kalibrierung 4 zugeführt. Die Kalibrierung 4 umschließt einen Hohlraum, dessen Profil dem Profil des Stranges S angepaßt ist. Es wird während des Herstellungsprozesses mit Unterdruck beaufschlagt, sodaß der Strang S auf die Innenwände der Kalibrierung 4 gesogen wird und nicht zusammenfallen kann. In der durch den Pfeil P angedeuteten Abzugsrichtung gelangt der Strang S hinter der Kalibrierung 4 in eine Kühleinrichtung 5, die ebenfalls auf dem Kalibriertisch 3 angebracht sein kann. Üblicherweise wird auch die Kalibrierung 4 gekühlt, beispielsweise durch Wasser, das durch entsprechende Bohrungen strömt.

Der abgekühlte und damit stabile Strang S wird von einer Abzugsvorrichtung 6 in Richtung des Pfeils P kontinuierlich abgezogen, die entsprechend der Darstellung in Fig. 2 beispielsweise als Raupenabzug ausgeführt sein kann. In der hinter der Abzugsvorrichtung 6 angedeuteten Bearbeitungsstation 7 kann der Strang S abgelängt werden.

Die aus den Fig. 1 und 2 in schematischer Darstellung ersichtliche Kalibrierung 4 besteht bei bekannten Vorrichtungen aus mehreren Teilen, die in Abzugsrichtung des herzustellenden Stranges S hintereinander angeordnet sind. Die Kalibrierung 4 hat einen Hohlraum, dessen Umrandung bzw. Profil den Abmessungen des Stranges S angepaßt ist. In den Hohlraum mündet eine Vielzahl von Bohrungen und/oder Schlitzen 8, von denen aus Fig. 4 und 5 jeweils eine ersichtlich ist, die mit einem Vakuumkanal 9 verbunden sind. Über die Bohrungen bzw. Schlitze 8 ist der Strang S an die innere Oberfläche der Kalibrierung 4 ansaugbar. Das ist besonders dann wichtig, wenn es sich bei dem herzustellenden Strang S um einen hohlen Profilkörper handelt.

Die Kalibrierung 4 ist mit ihrer einen Stirnseite nahe am Spritzkopf 2 des Extruders 1 angeordnet. Dadurch kann der aus dem Spritzkopf 2 austretende Strang S in noch warmem und daher weichem Zustand direkt in die Kalibrierung 4 eintreten, in der er unmittelbar gekühlt wird. Die Kalibrierung 4 hat dazu eine Eingangsöffnung, die entsprechend der Darstellung in Fig. 3 sich von der Stirnseite her nach innen bis zu dem Querschnitt konisch verengt, der dem gewünschten Querschnitt des Stranges S entspricht. Auch wenn die Kalibrierung 4 sehr nahe am Spritzkopf 2 angebracht wird, dann ist der Weg, den der Strang S vom Spritzkopf bis zum richtigen Querschnitt in der Kalibrierung 4 zurückzulegen hat, so weit, daß beispielsweise aus elastischen Effekten im Material des Stranges S Rückstellungen als "Memory-Effekt" aus dem Extruder auftreten und in der Kalibrierung 4 durch Abkühlen eingefroren werden. Unebenheiten und Markierungen, die hiedurch oder vom Spritzkopf 2 auf der Oberfläche des Stranges S erzeugt sind, können daher nur noch schlecht oder gar nicht mehr geglättet werden.

Gemäß der Erfindung ist daher zwischen dem Spritzkopf 2 des Extruders 1 und der Kalibrierung 4 ein metallischer Streifen 10 angebracht, der sich quer zur Bewegungsrichtung (Pfeil P) des Stranges S erstreckt. Der Streifen 10 ragt mit seiner Stirnseite 11 bis in die Ebene, in welcher die entsprechende Fläche des aus dem Spritzkopf 2 austretenden Stranges S bewegt wird. Er ist quer zur Bewegungsrichtung des Stranges S mindestens so breit wie dessen Fläche. Seine Stirnfläche 11 fluchtet in etwa mit der korrespondierenden Fläche des Hohlraumes der Kalibrierung 4. Der Streifen 10 schließt mit der Kalibrierung 4 einen Luftspalt 12 ein, der ebenso wie die aus den Fig. 4 und 5 ersichtlichen Bohrungen bzw. Schlitze 8 an Vakuum anschließbar ist. Entsprechend der Darstellung in Fig. 3 ist die Stirnseite 11 des Streifens 10 abgerundet, und zwar in Richtung der durch den Pfeil P angegebenen Abzugsrichtung des Stranges S.

Wenn der Strang S aus dem Spritzkopf 2 des Extruders 1 austritt, dann trifft er direkt auf den metallischen Streifen 10. Seine Oberfläche wird von dem Streifen 10 etwas eingedrückt und entsprechend geglättet, da das Material des Stranges S noch weich ist. Durch den in Abzugsrichtung zwischen dem Streifen 10 und der Kalibrierung 4 befindlichen Luftspalt 12, der an das Vakuum angeschlossen ist, wird das Material des Stranges S, so wie es etwas übertrieben in Fig.3 dargetellt ist, hochgesogen, sodaß der Strang S ständig mit Sicherheit an der Stirnseite 11 des Streifens 10 anliegt. Die entsprechende Oberfläche des Stranges S wird also von sämtlichen Unebenheiten und Markierungen sowie von flüchtigen Bestandteilen und Gleitmitteln befreit. Er gelangt mit dieser einwandfreien Oberfläche dann in die Kalibrierung 4, wo er weiter in seiner Form stabilisiert wird.

Da der Luftspalt 12 zwischen Streifen 10 und Kalibrierung 4 relativ große Abmessungen hat, ist das einzusetzende Volumen des Vakuums relativ hoch. Luftblasen oder auch Falschluft, die während des Verfahrens in den Luftspalt 12 eindringen, können sich daher auf die Funktion des Vakuums nicht auswirken. Das Material des Stranges S wird also mit Sicherheit immer von diesem Vakuum im Luftspalt 12 angesogen.

In Fig. 3 ist nur ein Streifen 10 dargestellt, mit dem im vorliegenden Fall die obenliegende Fläche des Stranges S geglättet wird. Wenn auch andere Flächen geglättet werden sollen, müssen dementsprechend auch an anderen Flächen Streifen in der gleichen Ebene wie der aus Fig. 3 ersichtliche Streifen 10 angebracht werden. Alle eingesetzten Streifen haben eine geringe Breite (in Abzugsrichtung). Sie sind von der Kalibrierung 4 durch Luftspalte getrennt, die an Vakuum angeschlossen werden. Wenn alle Flächen des Stranges S geglättet werden sollen, dann bietet sich auch der Einsatz eines kompletten Rahmens an, der einen Hohlraum umschließt, dessen Umrandung dem Profil des Stranges S entspricht.

Statt nur eines Streifens 10 können prinzipiell auch zwei oder mehr solcher in Bewegungsrichtung des Stranges S hintereinander angeordneter, in dieser Richtung sehr kurze Streifen vorgesehen werden, die jeweils durch relativ große Luftspalte voneinander bzw. von der Kalibrierung 4 getrennt sind. Alle Luftspalte sind während des Betriebes der Vorrichtung an Vakuum angeschlossen.

Der Streifen 10 kann in bevorzugter Ausführungsform Teil der Kalibrierung 4 sein, so wie es aus Fig. 4 ersichtlich ist. Er wird dementsprechend bereits bei der Herstellung der Kalibrierung 4 bzw. des in Abzugsrichtung vordersten Teiles derselben mitausgeformt. Der Luftspalt 12 kann dann besonders einfach mit an den Vakuumkanal 9 angeschlossen werden, durch welchen auch die in der Kalibrierung 4 angeordneten Bohrungen bzw. Schlitze 8 mit Vakuum versorgt werden. In den Fig. 4 und 5 ist mit dem Kreis 13 eine Bohrung angedeutet, durch welche Wasser geleitet werden kann, um die Kalibrierung 4 zu kühlen.

Der Streifen 10 kann entsprechend Fig. 5 auch als gesonderter Bauteil in seinem oberen Bereich nachträgtlich mit der Kalibrierung 4 verbunden werden. Dabei ist es prinzipiell möglich, auch den Luftspalt 12 zwischen Streifen 10 und Kalibrierung 4 besonders zu gestalten. In allen Fällen ist aber sicherzustellen, daß die am Strang S anliegende Stirnseite 11 des Streifens 10 abgerundet ist, damit die zu glättende Oberfläche des Stranges S nicht beschädigt wird.

Ensprechend der Darstellung in den Fig. 3 bis 5 ist der Streifen 10 im Verhältnis zur Länge der Kalibrierung 4 in Abzugsrichtung sehr schmal. Er kann an der Stirnseite 11, welche am Strang S anliegt, beispielsweise eine Breite von 2 bis 10 mm haben. Diese Breite sollte nicht wesentlich überschritten werden, damit der hinter dem Streifen 10 angeordnete, am Vakuum liegende Luftspalt 12 in der oben geschilderten Funktion wirksam werden kann. Das noch weiche Material des Stranges S wird dann durch das Vakuum immer gegen die Stirnseite 11 des Streifens 10 gesogen.

Der Streifen 10 muß nicht Teil der Kalibrierung 4 sein und er muß auch nicht an derselben befestigt sein. Prinzipiell wäre es auch möglich, den Streifen 10 gesondert anzubringen oder denselben beispielsweise auch am Spritzkopf 2 zu befestigen. Von wesentlicher Bedeutung ist auch, daß der aus gut wärmeleitendem Material, beispielsweise aus Messing, bestehende Streifen 10 sich während des Verfahrens relativ schnell erwärmt. Er kann zwar gekühlt werden, aber die Erwärmung ist durchaus gewünscht, da sie die glättende Wirkung verbessert. Es ist dadurch außerdem sichergestellt, daß der Strang S gerade in dem Bereich, in dem seine Oberfläche geglättet werden soll, nicht zu schnell abkühlt. Die Abkühlung mit entsprechender Verfestigung des Stranges S tritt dann erst in der eigentlichen Kalibrierung 4 ein.

## Patentansprüche

1. Vorrichtung zur Herstellung eines Profilkörpers (S), bestehend aus einer Plastifiziervorrichtung (1) zur kontinuierlichen Erzeugung dieses Profilkörpers (S), aus einer diesen Profilkörper (S) kontinuierlich abziehenden Abzugsvorrichtung (6) und aus einer zwischen der Plastifiziervorrichtung (1) und der Abzugsvorrichtung (6) angeordneten Kalibrierung (4), durch welche der Profilkörper hindurchgezogen wird, wobei zwischen der Plastifiziervorrichtung (1) und der eigentlichen Kalibrierung (4) zumindest im Bereich der Flächen des Profilkörpers (S), die später sichtbar sind, jeweils ein metallischer Streifen (10) angebracht ist, der quer zur Bewegungsrichtung (P) des Profilkörper (S) verlaufend mindestens so breit wie dieser ist und der mit der Stirnseite (11) bis in die Ebene hineinragt, in der die entsprechende Fläche des Profilkörpers (S) liegt, **dadurch gekennzeichnet,** daß die Breite dieses Steifens in Bewegungsrichtung (P) des Profilkörpers (S) maximal 25 mm, vorzugsweise maximal 10 mm beträgt und daß der Streifen (10) durch einen mit Vakuum beaufschlagten Luftspalt (12) von der Kalibrierung (4) getrennt ist.

2. Vorrichtung nach Anspruch 1, **dadurch gekennzeichnet,** daß der Streifen (10) an der Kalibrierung (4) befestigt ist oder einstückig mit dieser ausgebildet ist.

3. Vorrichtung nach Anspruch 1, **dadurch gekennzeichnet,** daß der Streifen (10) am Spritzkopf (2) der Plastifiziervorrichtung (1) befestigt ist.

4. Vorrichtung nach einem der Ansprüche 1-3, **dadurch gekennzeichnet,** daß die Stirnseite (11) des Streifens (10) in Bewegungsrichtung (P) des Profilkörpers (S) abgerundet ist.

5. Vorrichtung nach einem der Ansprüche 1-4, **dadurch gekennzeichnet,** daß die Stirnseite (11) des Streifens (10) mit der korrespondierenden Fläche des den Profilkörper (5) aufnehmenden Hohlraums der Kalibrierung (4) ungefähr fluchtet.

6. Verfahren zur Herstellung eines Profilkörpers (S), bestehend aus einem in einer Düse geformten, plastifizierten, kontinuierlich erzeugten Kunststoffprofil, das kontinuierlich durch einen Abzug (6) abgezogen wird und das zwischen der formgebenden Düse (2) und der Abzugsvorrichtung (6) durch eine oberflächenkonturgebende Kalibriervorrichtung (4), die im Einlaufbereich einen metallischen Streifen (10) aufweist, hindurchgezogen wird, **dadurch gekennzeichnet,** daß in dem Einlaufbereich der Kalibriervorrichtung (4) durch einen, zwischen dem Streifen (10) und der Kalibriervorrichtung (4) gebildeten Spalt (12) quer zur Extrusionsrichtung (P) ein gleichmäßiges Vakuum an zumindest die Flächen des Profilkörpers (S),die später sichtbar sind, angelegt wird, daß auch bei Zufuhr von Falschluft dieses Vakuum aufrecht erhalten bleibt, weil das Volumen des Spaltes (12) im Verhältnis zu dem darüberliegenden Vakuumraum klein ist, und daß aus der Oberfläche des Profiles (S) durch das im heißen Zustand anliegende Vakuum flüchtige Bestandteile abgezogen werden und diese Bestandteile über das Vakuum abtransportiert werden.

7. Verfahren nach Anspruch 6, **dadurch gekennzeichnet,** daß der Spalt (12) zwischen 10-20 mm vom Einlaufbereich entfernt ist.

## Claims

1. A device for the manufacture of a section body (S), consisting of a plasticising device (1) for the continuous production of this section body (S), of a drawing off device (6) continuously drawing off this section body (S) and of a calibration (4), arranged between the plasticising device (1) and the drawing off device (6), through which calibration (4) the section body is drawn, wherein between the plasticising device (1) and the actual calibration (4) at least in the region of the faces of the section body (S) which are later visible, in each case a metallic strip (10) is arranged which, running transversely to the direction of movement (P) of the section body (S) is at least as wide as the latter and which projects with the end face (11) into the plane in which the corresponding face of the section body (S) lies, characterized in that the width of this strip in the direction of movement (P) of the section body (S) amounts to a maximum of 25 mm, preferably a maximum of 10 mm, and that the strip (10) is separated from the calibration (4) by an air gap (12) which is acted upon by a vacuum.

2. A device according to Claim 1, characterized in that the strip (10) is secured on the calibration (4) or is constructed in one piece therewith.

3. A device according to Claim 1, characterized in that the strip (10) is secured on the injection head (2) of the plasticising device (1).

4. A device according to one of Claims 1-3, characterised in that the front face (11) of the strip (10) is rounded in the direction of movement (P) of the section body (S).

5. A device according to one of Claims 1-4, characterised in that the front face (11) of the strip (10) is approximately in alignment with the corresponding face of the cavity of the calibration (4) receiving the section body (S).

6. A method for the manufacture of a section body (S), consisting of a plasticised, continuously produced plastics section, formed in a nozzle, which section is continuously drawn off through an outlet (6) and which is drawn between the forming nozzle (2) and the drawing off device (6) through a calibrating device (4) which gives a surface contour and which has a metal strip (10) in the inlet region, characterized in that in the inlet region of the calibrating device (4) through a gap (12), formed between the strip (10) and the calibrating device (4), transversely to the extrusion direction (P) a uniform vacuum is applied to at least the faces of the section body (S) which are later visible, that this vacuum is also maintained in the case of the supply of infiltrated air, because the volume of the gap (12) is small in relation to the vacuum space lying thereabove, and that volatile components are drawn off from the surface of the section (S) through the vacuum applied in a hot state, and these components are transported away via the vacuum.

7. A method according to Claim 6, characterised in that the gap (12) is between 10-20 mm distant from the inlet region.

## Revendications

1. Appareil de fabrication d'un corps profilé (S), se composant d'un organe de plastification (1) pour fabriquer en continu ce corps profilé (S), d'un dispositif de réception (6) recevant en continu ce corps profilé (S) et d'un dispositif de calibrage (4) disposé entre le dispositif de plastification (1) et le dispositif de réception (6), et à travers lequel le corps profilé est tiré, dans lequel est disposé, entre le dispositif de plastification (1) et le dispositif de calibrage (4) proprement dit, du moins dans la zone des surfaces du corps profilé (S), qui sont visibles ultérieurement, respectivement une bande métallique (10), qui s'étend transversalement à la direction de déplacement (P) du corps profilé (S), en étant au moins aussi large que ce dernier et qui par sa face frontale (11) fait saillie dans le plan dans lequel se trouve la surface correspondante du corps profilé (S), caractérisé en ce que la largeur de cette bande dans la direction de déplacement (P) du corps profilé (S) atteint au maximum 25 mm, de préférence au maximum 10 mm, et en ce que la bande (10) est séparée du calibrage (4) par un intervalle d'air (12) mis sous vide.

2. Appareil selon la revendication 1, caractérisé en ce que la bande (10) est fixée au calibrage (4) ou est réalisée monobloc avec celui-ci.

3. Appareil selon la revendication 1, caractérisé en ce que la bande (10) est fixée à la tête d'injection (2) du dispositif de plastification (1).

4. Appareil selon l'une des revendications 1 à 3, caractérisé en ce que la face frontale (11) de la bande (10) est arrondie dans la direction de déplacement (P) du corps profilé (S).

5. Appareil selon l'une des revendications 1 à 4, caractérisé en ce que la face frontale (11) de la bande (10) est approximativement alignée avec la surface correspondant de l'espace creux du dispositif de calibrage (4) recevant le corps profilé (5).

6. Procédé de fabrication d'un corps profilé (S), se composant d'un profilé en matière plastique, formé dans une filière, plastifié; fabriqué en continu, qui est reçu en continu par un dispositif de réception (6) et qui est tiré entre la filière (2) donnant la forme et le dispositif de réception (6), à travers un dispositif de calibrage (4) donnant un contour de surface et qui comporte, dans la une d'entrée, une bande métallique (10), caractérisé en ce que, dans la zone d'entrée du dispositif de calibrage, par l'intermédiaire d'un intervalle (12) formé entre la bande (10) et le dispositif de calibrage (4), et transversalement à la direction d'extrusion (P), est établi un vide homogène sur au moins les surfaces du corps profilé (S), qui sont visibles ultérieurement, en ce que même dans le cas d'introduction d'air aspiré par les fruites, ce vide est maintenu, car le volume de l'intervalle (12) est faible par rapport à la chambre de de vide située au-dessus, et en ce que les composant volatils sont extraits de la surface du profilé (S) par le vide appliqué à l'état chaud, et ces composants volatils sont évacués par le vide.

7. Procédé selon la revendication 6, caractérisé en ce que l'intervalle (12) est éloigné d'une distance comprise entre 10 et 20 mm de la zone d'entrée.
